Europäisches Patentamt

European Patent Office

Office européen des brevets

(11) Publication number: **0 201 229**
**A1**

(12) **EUROPEAN PATENT APPLICATION**

(21) Application number: **86302877.5**

(22) Date of filing: **17.04.86**

(51) Int. Cl.⁴: **F 16 K 37/00, F 15 B 13/044**

(30) Priority: **26.04.85 GB 8510665**

(43) Date of publication of application: **12.11.86**
**Bulletin 86/46**

(84) Designated Contracting States: **DE FR GB IT SE**

(71) Applicant: **Vickers Systems Limited, P.O. Box 4 New Lane, Havant Hant PO9 2NE (GB)**

(72) Inventor: **Heiser, Joachim K.H., 5, Three Acres Denmead, Portsmouth Hampshire (GB)**

(74) Representative: **Singleton, Jeffrey et al, ERIC POTTER & CLARKSON 27 South Street, Reading Berkshire, RG1 4QU (GB)**

(54) **Control valves.**

(57) A control valve having a housing (1), a fluid flow controlling member (2) slidably mounted in the housing and operable to control fluid flow through the valve, and a position transducer (23) operable to sense the position of the fluid flow controlling member and provide an electrical feedback signal representative thereof, the transducer (23) being mounted within the valve housing (1).

ACTORUM AG

-1-

## CONTROL VALVES

This invention relates to control valves and more particularly, but not exclusively, to hydraulic control valves.

The invention has arisen in connection with proportional control valves and will in the main be discussed with reference thereto but the invention has a wider application. There is a need to sense the position of the fluid flow controlling member of a proportional control valve and to derive an electrical signal representative of that position which is fed back to a control amplifier for the valve. This feedback signal is normally obtained from a position transducer which is mounted on the end of an actuator, such as a solenoid, which positions the fluid flow controlling member in response to a demand signal from the control amplifier. Whilst feedback can be achieved satisfactorily from the technical standpoint in this manner, a number of problems have to be met to this end which adds considerably to the cost of the control valve and, in some instances, restricts the application thereof. These problems are as follows:-

1.    The transducer normally requires to be aligned with the longitudinal axis of the valve, which is not always easy to achieve and maintain, so as to be aligned with the solenoid or other actuator mounted on the end of the valve.

2.    Attachment of the transducer to the actuator or valve body.

3.    Accumulation of tolerance errors due to the number of components involved.

4.    Mechanical setting of the null position.

5.    Vulnerability of the transducer to damage due to its exposed position.

6.    Vulnerability of exposed electrical wiring

-2-

connecting the transducer to the control amplifier.

7. Increase in overall length of the valve due to the transducer which can limit, in physical terms, the application of the valve.

A common position transducer employed in proportional control valves is the linear variable displacement transformer (LVDT) and this is mounted on the end of the solenoid, or other actuator, in order to be responsive to movement thereof, and hence to movement of the fluid flow controlling member to which the actuator is connected.

According to the present invention, there is provided a control valve having a housing, a fluid flow controlling member slidably mounted in the housing and operable to control fluid flow through the valve, and a position transducer mounted within the housing and operable to sense the position of the fluid flow controlling member and provide an electrical feedback signal representative thereof.

Preferably, the position transducer has one part mounted directly on the fluid flow controlling member, which significantly increases the accuracy of the feedback signal, and a complementary part fixedly mounted within the housing. In spite of the space limitations existing within a given valve housing and the environment, it has been found that a number of different types of position transducers can be employed, although they have had to be designed specifically for the purpose. Examples of the different types of transducers which may be employed are as follows:-

1. Potentiometric devices
2. Moire fringe optical devices
3. Absolute optical encoders
4. LVDT
5. Capacitive devices
6. Magnetic devices.

-3-

The mounting of the position transducer within the valve housing represents a significant advance in the art and gives rise to a number of advantages in addition to meeting the problems enumerated above experienced with known control valves.  These additional advantages include:-

1.    Significantly reducing the operating temperature of the transducer and associated electronics.

2.    Permitting removal of the solenoids or other actuators without disturbing the null settings of the position transdsucer electronics.

3.    Manual overrides for the fluid controlling member can be employed as access to the ends of the actuator for the latter is not now prevented by the former external end-mounted position transducers.

4.    Adjustable end stops for the fluid flow controlling member can be accommodated, again as a result of the absence of the end-mounted position transducers.

The electronics for the position transducer, which include the control amplifier, may be integrated with the control valve to provide a very compact overall package which has no exposed electrical connections as between the transducer and the control electronics.

Control valves in accordance with the present invention will now be described in greater detail, by way of example, with reference to the accompanying drawings, in which:-

Figure 1 is a side view, partly in section, of one embodiment of the invention,

Figure 2 is an end view of the valve of Figure 1, with certain components removed,

Figures 3 to 5 are scrap views of Figure 1 but showing respectively three modifications, and

Figure 6 is a side view, partly in section, of another embodiment of the invention.

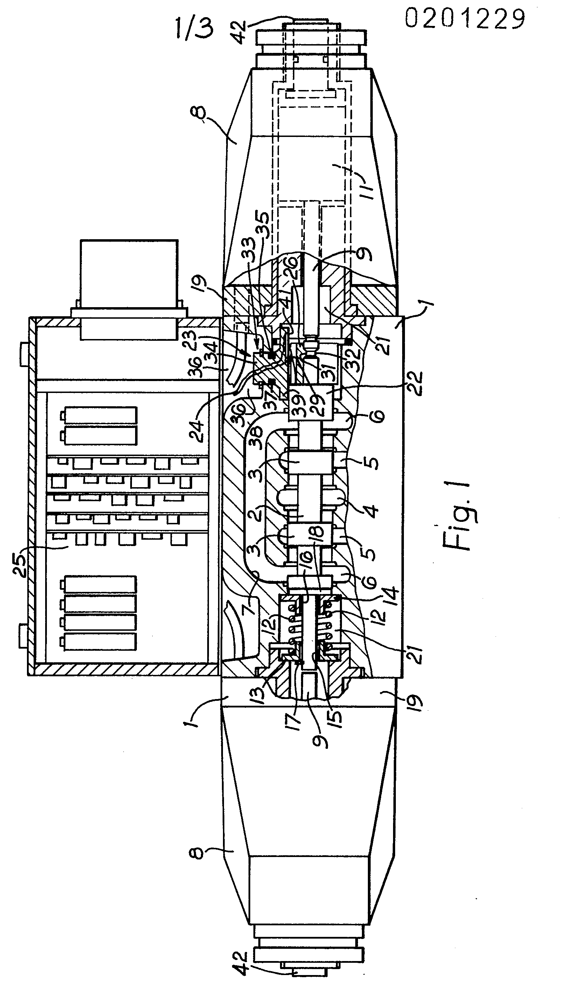

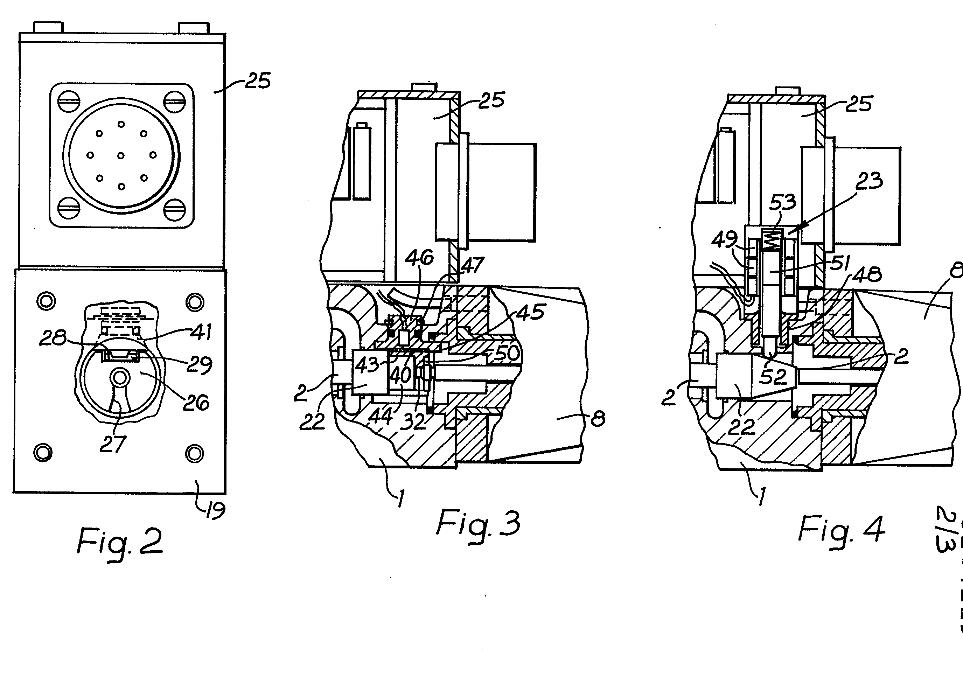

Referring first to Figures 1 and 2, the valve shown therein is a single-stage, two-solenoid, single stage,

-4-

proportional hydraulic control valve comprising a housing or valve body 1 within which is slidably mounted a fluid flow controlling member in the form of a spool 2 having lands 3 which control the flow of fluid from a pressure fluid inlet or port 4 to one or other of two service ports or outlets 5. The service port 5 not connected to the pressure port at a given instant is vented to tank via an associated tank port 6, the two tank ports being interconnected by an internal gallery or drilling 7.

The spool 2 is positioned to effect the desired fluid flow to a load (not shown) by two actuators in the form of solenoids 8 acting on respective ends of the spool via push rods 9 connected to the solenoid armatures 11. The spool 2 is centred by a double-acting compression spring 12 which acts between two flanges 13 and 14 on sleeves 15 and 16, respectively, which are mounted on one end of the spool having a reduced diameter. The sleeve 15 is retained by a circlip 17 and the sleeve 16 by a step 18 on the valve body 1. The solenoids 8 are provided in end caps 19 attached to the valve body 1, the end caps and body together defining end chambers 21 which are filled with hydraulic fluid due to leakage past end lands 22 on the spool 2. The components thus for described are those of a conventional control valve.

In accordance with the present invention, the valve further comprises a position transducer 23 mounted within the valve body 1 and operable to sense the position of the spool 2 within the valve body 1 and provide an electrical feedback signal representative thereof. The feedback signal is fed via electrical leads 24 to control electronics indicated generally at 25 and including a control amplifier. The control electronics 25 are integrated with the valve by being mounted directly on the valve body 1 to provide a compact overall package.

The position transducer 23 is a potentiometric device and comprises two parts, one mounted directly on the spool 2 and the complementary other part fixedly mounted within the valve body 1. More specifically, the spool-mounted part comprises a carrier 26 in the form of a generally cylindrical body of a synthetic plastics material having a longitudinally-extending keyhole slot 27 which enables the carrier to be snap fitted over the reduced diameter end of the spool 2 opposite to that about which the centring spring 12 is mounted although these two components can be provided on the one and the same end if desired. The carrier 26 has a flat 28 on which is mounted a wiper 29 and the carrier is mounted such that there is no relative radial or longitudinal (axial) movement between it and the spool 2. Relative radial movement is prevented by the keyhole slot 27 arrangement, and relative axial movement by an annular rib 31 (interrupted by the slot 27) formed on the carrier 26 and cooperable with an annular groove 32 provided on the end of the spool.

The complementary and valve-body-mounted part of the transducer comprises a carrier 33 having a cylindrical portion 34 which is received in an aperture 35 in the valve body, the aperture extending between the associated valve end chamber 21 and a chamber 36 which is open to atmosphere although covered by the control electronics 25. The cylindrical carrier portion 34 is sealed in the aperture 35 by an O-ring 37 to prevent escape of hydraulic fluid from the associated end chamber 21 and is retained by a circlip 38 which is bowed so as to pull a head portion 39 of the carrier 33 into engagement with the adjacent surface of the valve body 1. The head portion 39 carries resistive tracks 41 which are wiped by the wiper 29 on movement of the spool 2.

In operation, a demand signal is generated and applied to the control amplifier. The demand signal is compared with the voltage or current feedback signal from the transducer 23 to provide an error signal which is used to drive one or other of the solenoids 8 according

-6-

to the sign of the error signal. The driven solenoid 8 moves the spool 2 to reduce this error.

In the event of the spool 2 sticking, for example, it can be actuated by a manual override 42 provided at each end of the valve and in the form of a plunger which, when actuated, moves the associated solenoid armature 11 which in turn moves the related push rod 9 and hence the spool.

Turning now to Figures 3 to 5, these show scrap views of the valve of Figure 1 towards the right-hand end but having respective modified forms of position transducer 23. In Figure 3, the transdsucer 23 is of the Moire fringe optical type in which a carrier 43 of the spool-mounted part is generally similar to the carrier 26 of the transducer of Figure 1 except that it is fitted to a stepped portion 43 of the spool 2 disposed between the adjacent end land 22 and the reduced diameter end of the spool, the stepped portion 44 having a diameter between that of the end land and the spool end portion. The carrier 43 is provided with an optical grating 45. The keyhole slot for snap fitting the carrier 43 on the spool 2 is provided in a radial flange 50, the inner diameter of which cooperates with the groove 32 on the spool end. As the grating 45 requires less space than the wiper 29 of Figure 1, the thickened step portion 44 can be provided for extra strength. The carrier 46 of the complementary part of the transducer is similar to the carrier 33 of Figure 1 but is either itself transparent or has a transparent window to allow light transmission to and from an optical transceiver 47 embodied within the carrier, and an optical grating 40.

In the embodiment of Figure 3, the null or datum position occurs when the spool 2 is in the centred position of Figure 1, or some predetermined offset position. When the spool 2 moves in operation of the valve, the light is transmitted to, and reflected from,

-7-

the optical grating 45 via the grating 40 resulting in interference bands the number of which is counted by the transceiver 47, this number being proportional to the distance moved, and hence the position relative to the null or datum position, of the spool 2. An electrical feedback signal is produced in accordance with this count.

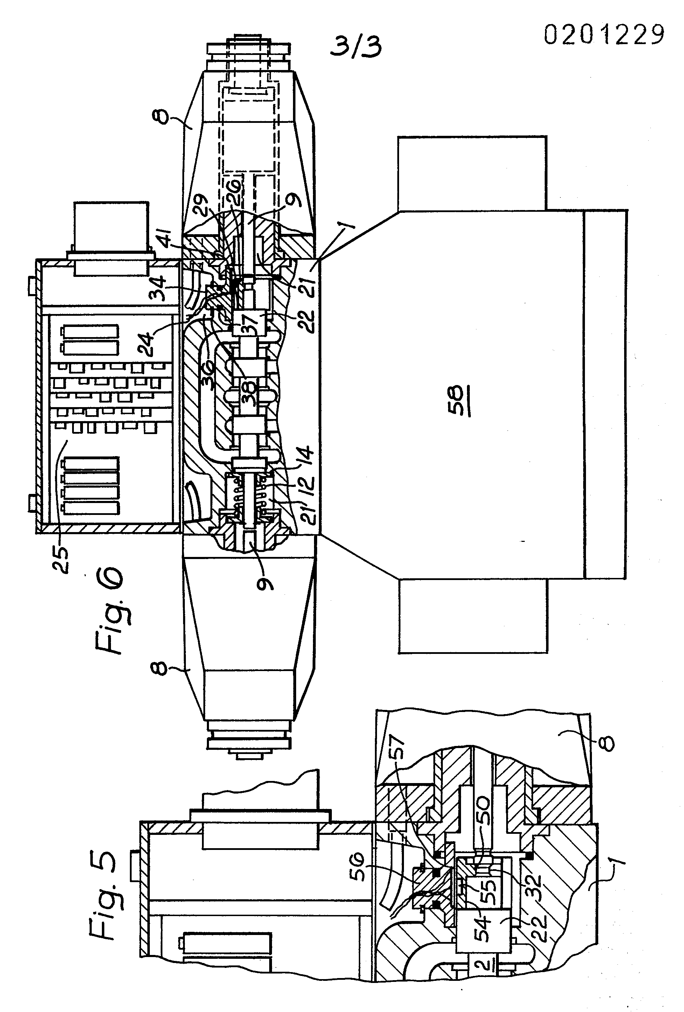

In Figure 4, there is illustrated an LVDT transducer 23 mounted in a generally cylindrical carrier 48 sealed in the valve body aperture 35 as with the other embodiments and carrying the LVDT which extends into the control electronics housing. The transducer 23 comprises fixed coils 49 and a moving core 51 which carries a plunger 52 which is spring loaded by a spring 53. In this embodiment, there is no need for a carrier on the spool. Instead, the end of the spool 2 is tapered and the plunger 52 is spring loaded into contact with this tapered portion so that it is moved in and out of the fixed coils (together with the core 51) as the spool 2 moves in one direction or another. This movement of the core 51 produces an electrical feedback signal representative of the position of the spool 2.

The transducer of the embodiment of Figure 5 is a magneto-restrictive device and the spool-mounted part has a carrier 54 generally similar to the carrier 43 of Figure 4 and carrying a low powered magnet 55. The complementary part of the transducer mounted in the valve body 1 comprises a carrier 56 generally similar to the carriers 33, 46 and 48 and carries a resistive track 57 having a potential difference applied across it. As the spool 2 moves in operation of the valve, a change in voltage occurs at a centre tap of the track 57 which provides the feedback signal representative of the position of the spool.

The single stage valves of Figures 1 to 5 may be used as pilot stages for a main valve 58 as illustrated

-8-

in Figure 6, this figure showing the valve of Figure 1 as the pilot stage.

In the illustrated embodiments, the double-acting spring 12 may be replaced by two single-acting springs disposed in the respective end chambers 21 and acting on the ends of the spool 2. The spring arrangement, whatever it is, may be assisted by one or other solenoid or other actuator, depending on how the latter are operated. For example the solenoids may have a low current applied thereto even in the valve null position.

It is not essential to employ two solenoids or other actuators and one will suffice in certain cases but whatever number is employed, the actuators can be those available as standard items in that the invention does not entail the use of special, and therefore costly, actuators.

The transducer 33 can be mounted anywhere within the valve body 1 and does not recessarily have to be associated with one end of the spool 2 as shown in the illustrated embodiments. It could be mounted centrally of the spool, for example. The spool-mounted carrier, when employed, of the transducer 23 may be located other than by the groove and rib arrangement illustrated. Springs or other devices may be used to this end.

It should be noted that a valve in accordance with the present invention does not require any special construction and can in fact be made as a general purpose valve which, when required to embody the present invention, needs only to be drilled to accommodate the body-mounted carrier of the transducer, and the appropriate spool used. The valve body is symmetrical and all of these points are very advantageous in not necessitating special and costly components in order to implement the present invention.

The location of the position transducer within the valve housing was first thought to be difficult in view of what appears at first sight to be a hostile environment and small space. However, it has been found that the transducers 33 operate very satisfactorily in hydraulic oil and in fact a surprising advantage results in that the oil serves to maintain the transducer at a significantly lower temperature than would be the case if mounted externally of the valve as in the prior art. This is because the hydraulic oil is maintained normally at about $50^{\circ}C$, sometimes rising to $80^{\circ}C$ but this is a maximum because beyond that temperature oil degradation occurs which must be avoided. In contrast, transducers mounted integrally with solenoids or other actuators are typically subjected to temperatures of $100^{\circ}C$ and beyond.

It will be appreciated that the overall length of the valve in accordance with the present invention is considerably less than a similar valve of the prior art in view of the absence of externally-mounted transducers each of which may be 70 cms long so that a substantial overall reduction in length is achieved. Furthermore, the cost of the transducer is reduced as well as the cost of the valve in that it is of standard construction so that the invention affords a low-cost valve without any offsets in performance which in certain areas is actually enhanced.

-10-

CLAIMS

1. A control valve having a housing, a fluid flow controlling member slidably mounted in the housing and operable to control fluid flow through the valve, and a position transducer operable to sense the position of the fluid flow controlling member and provide an electrical feedback signal representative thereof, characterised in that the transducer (23) is mounted within the valve housing (1).

2. A valve according to claim 1, characterised in that the transducer (23) has one part (26, 43, 54) mounted on the flow controlling member (2) and a complementary part (33, 46, 48, 56) fixedly mounted in the housing (1).

3. A valve according to claim 2, characterised in that the transducer (23) is a potentiometric device and comprises wiper means (29) mounted on the flow controlling member (2) or in the housing (1) and resistive means (41) mounted in the housing or on the flow controlling member, as appropriate, the wiper means being arranged to wipe the resistive means on movement of the flow controlling member.

4. A valve according to claim 2, characterised in that the transducer (23) is an optical device comprising an optical transceiver (47) mounted on the flow controlling member (2) or in the housing (1) and reflective means (45) mounted in the housing or on the flow controlling member, as appropriate, the transceiver being operable to direct light on to the reflective means and to receive light reflected therefrom from which a position feedback signal is derived.

5. A valve according to claim 4, characterised in that the transducer (23) is a Moire fringe optical device and the reflective means comprises an optical grating (45).

6. A valve according to claim 4, characterised in that the transducer (23) is an absolute optical encoder.

7. A valve according to claim 2, characterised in that

-11-

the transducer (23) is a magneto-restrictive device and comprises a magnet (55) mounted on the flow controlling member (2) or in the housing (1) and resistive means (57) mounted in the housing or on the flow controlling member, as appropriate, relative movement between the magnet and the resistive means as a result of movement of the flow controlling member providing the position feedback signal.

8. A valve according to claim 1, characterised in that the transducer (23) is a linear variable displacement transformer of which the moving core (51) is responsive to movement of the flow controlling member (2) to provide the position feedback signal.

9. A valve according to claim 8, characterised in that the transducer (23) further comprises a plunger (52) which carries the moving core (51), one end of the plunger being engageable with a tapered portion of the flow controlling member (2).

10. A valve according to any of claims 2 to 9, characterised in that the part (33, 46, 48, 56) of the transducer which is mounted in the housing (1) comprises a carrier which is sealed in a fluid tight manner in an aperture (35) within the housing.

11. A valve according to claim 10, characterised in that the carrier (33, 46, 48, 56) is secured in position by a circlip which is bowed to urge the carrier into contact with an internal surface of the housing (1).

12. A valve according to any of claims 2 to 7, characterised in that the part (26, 43, 54) of the transdsucer which is mounted on the flow controlling member (2) is a generally cylindrical carrier provided with a keyhole slot (27) by which it is snap fitted over a portion of the flow controlling member, whereby relative radial movement between the carrier and the flow controlling member is prevented.

13. A valve according to claim 12, characterised in that

-12-

the carrier is provided with a radially-extending member (31) which engages an annular groove (32) in the flow controlling member to prevent relative axial movement between these two components.

14. A valve according to any of the preceding claims, characterised in that it further comprises control electronics (25) integrated with the valve housing (1).

15. A valve according to claim 14, characterised in that the position feedback signal provided by the transducer (33) is applied to the control electronics (25) via electrical leads which are accommodated entirely within the valve housing (1) and control electronics.

15. A valve according to any of the preceding claims, characterised in that at least one manual override device (42) is provided which, when actuated, effects manual movement of the flow controlling member (2).

16. A valve according to any of the preceding claims, characterised in that it is a single stage valve.

17. A valve according to any of claims 1 to 15, characterised in that it is the pilot stage of a multi-stage valve.

0201229

Fig. 1

Fig. 2

Fig. 3

Fig. 4

Fig. 5

Fig. 6

0201229

European Patent Office

**EUROPEAN SEARCH REPORT**

Application number

EP 86 30 2877

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | DE-A-2 604 355 (FRIESEKE & HOEPFNER GmbH) * Claim 1; page 7, lines 15-22 * | 1,2,7, 8 | F 16 K 37/00 F 15 B 13/044 |
| X | GB-A-2 138 969 (ISHIKAWAJIMA-HARIMA JUKOGYO K.K.) * Page 1, lines 24-33; figure 4 * | 1,2 | |
| A | DE-A-2 131 517 (G.AMBACHER) | | |
| A | FR-A-2 392 306 (H.SPOHR) | | |
| A | FR-A-2 265 162 (ETS. M.GRIFFET) | | |
| A | US-A-4 049 965 (NATIONAL RESEARCH DEVELOPMENT CORP.) | | |

TECHNICAL FIELDS SEARCHED (Int. Cl.4)

F 16 K 37/00
F 15 B 13/00

The present search report has been drawn up for all claims

| Place of search | Date of completion of the search | Examiner |
|---|---|---|
| THE HAGUE | 04-08-1986 | DE SMET F.P. |